(19) Europäisches Patentamt

European Patent Office

Office européen des brevets

(11) **EP 0 831 515 B1**

(12) **EUROPEAN PATENT SPECIFICATION**

(45) Date of publication and mention
of the grant of the patent:
**13.11.2002 Bulletin 2002/46**

(51) Int Cl.⁷: **H01J 29/82**, H01J 29/70,
H01J 29/86

(21) Application number: **97307237.4**

(22) Date of filing: **17.09.1997**

(54) **Cathode ray tube apparatus**

Kathodenstrahlröhre

Tube à rayons cathodiques

(84) Designated Contracting States:
**DE FR GB**

(30) Priority: **18.09.1996 JP 24647696**
**15.08.1997 JP 22034597**

(43) Date of publication of application:
**25.03.1998 Bulletin 1998/13**

(73) Proprietor: **KABUSHIKI KAISHA TOSHIBA**
**Kawasaki-shi, Kanagawa-ken 210-8572 (JP)**

(72) Inventors:
• **Sano, Yuuichi c/o Intellectual Prop. Div.,**
**1-1-1 Shibaura, Minato-ku, Tokyo (JP)**

• **Yakota, Masahiro c/o Intellectual Prop. Div.,**
**1-1-1 Shibaura, Minato-ku, Tokyo (JP)**

(74) Representative: **Shindler, Nigel**
**Brookes Batchellor**
**102-108 Clerkenwell Road**
**London EC1M 5SA (GB)**

(56) References cited:
**WO-A-92/16958**          US-A- 3 731 129
US-A- 3 806 750

Description

BACKGROUND OF THE INVENTION

**Field of the Invention**

This invention relates to a cathode ray tube apparatus such as a color cathode ray tube apparatus and the like and, more particularly, a cathode ray tube apparatus which is capable of reducing deflection power consumption and whose vacuum enclosure has strong anti-atmospheric pressure strength.

Related Art

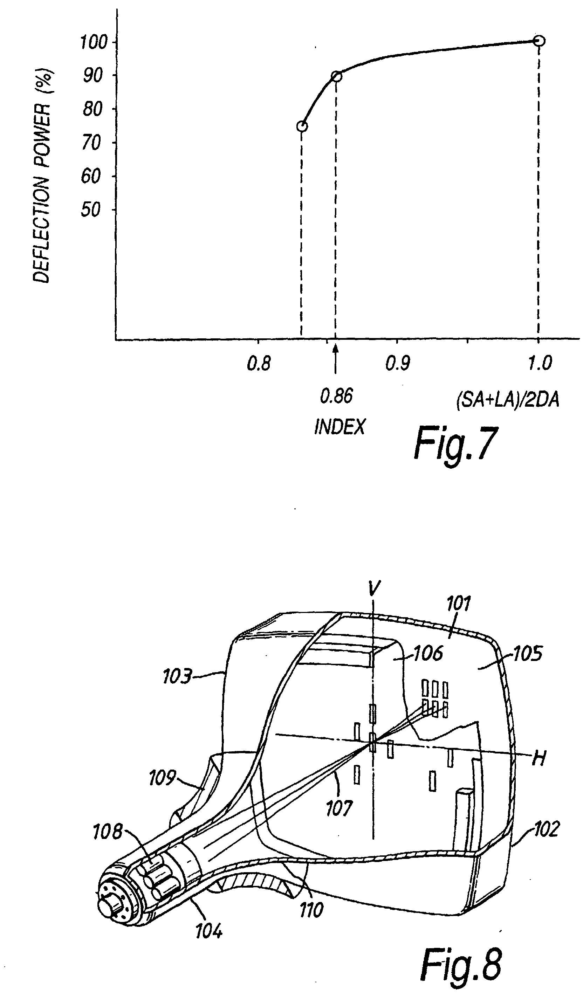

A color picture tube is shown in Figure 8 as one example of cathode ray tubes. The color cathode ray tube includes a vacuum enclosure which consists essentially of a glass panel 102 with an approximately rectangular-shaped display screen 101, a glass funnel 103 connected to the panel 102, and a cylindrical glass neck 104 connected to the funnel 103. A deflection yoke 109 is fixed at an outer peripheral section ranging in part from the neck 104 to the funnel 103. The funnel 103 includes the so-called yoke portion 110 which has a smaller end portion from the junction with the neck 104 to the peripheral section on the side of the funnel 103. The inner surface of the panel 102 are provided with phosphor screen 105 made of three-color phosphor layers of dot-like or stripe-like blue, green and red phosphors. A shadow mask 106 containing a great deal of electron beam penetrating apertures is disposed opposite to the phosphor screen 105.

An electron gun 108 is provided to emit three electron beams 107 which are deflected in the horizontal and vertical directions in the horizontal and vertical magnetic fields generated by the deflection yoke 109, and scan through the shadow mask 106 the phosphor screen 105 in the horizontal and vertical directions to display color images on the display screen 101.

A self-convergence, in-line type color picture tube has been widely used because an in-line type electron gun is adopted for the electron gun 108 to emit the electron beams 107 in a row on a same horizontal plane and the deflection yoke 109 is set to generate a pin cushion type horizontal magnetic field and a barrel type vertical magnetic field so that the electron beams 107 are converged on the phosphor screen 105 over the entire panel 102 without any special correction components.

In a cathode ray tube of this sort, since the deflection yoke 107 is a big power consumption component, it is quite important to decrease power consumed in the deflection yoke 107 for the reduction of power consumption in the cathode ray tube. In practice, however, in order to increase screen brightness, a cathode voltage must be eventually raised to accelerate the electron beams. Further, the deflection frequency must also be high to comply with requirements for high definition TVs, personal computers, and other office automation equipment, but it results in increase of power consumption in the deflection yoke.

Recently, strict restrictions are imposed on leakage magnetic fields from the deflection yokes 109 of cathode ray tubes used for personal computers and other office automation equipment to which operators are always close. Generally, a compensation magnetic coil is conventionally added to reduce the leakage magnetic fields from the deflection yoke 109. It brings about more increase of the power consumption in the cathode ray tubes.

It is desirable for a deflection yoke to exert efficiently its magnetic field over electron beams. For that purpose, the neck of a cathode ray tube is made small in diameter, the deflection yoke fixed portion is made small in configuration, and a deflection magnetic field operating space is made small.

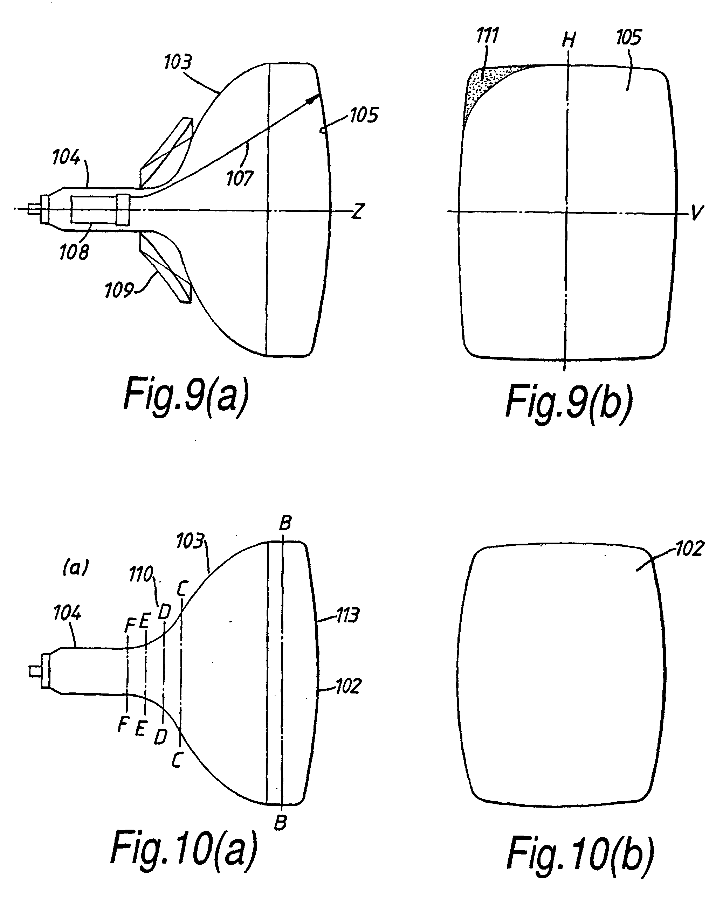

Since in a conventional cathode ray tube, however, the electron beams pass closely along the inner surface of the yoke portion, if the neck 104 is small in diameter and the yoke portion 110 is also made small in configuration, the electron beams emitted toward a diagonal edge of the phosphor screen 105 at the largest deflection angle as shown in Figure 9(a) collide against the inner wall of the yoke portion 110 as shown in Figure 9(b). In the event that the electron beams 107 continue to collide with the inner wall, its temperature raises so high to melt the glass inner wall and, eventually, the cathode ray tube is in danger of implosion. It is, therefore, difficult to reduce the deflection power consumption by means of making the neck 104 or the yoke portion 110 small in size.

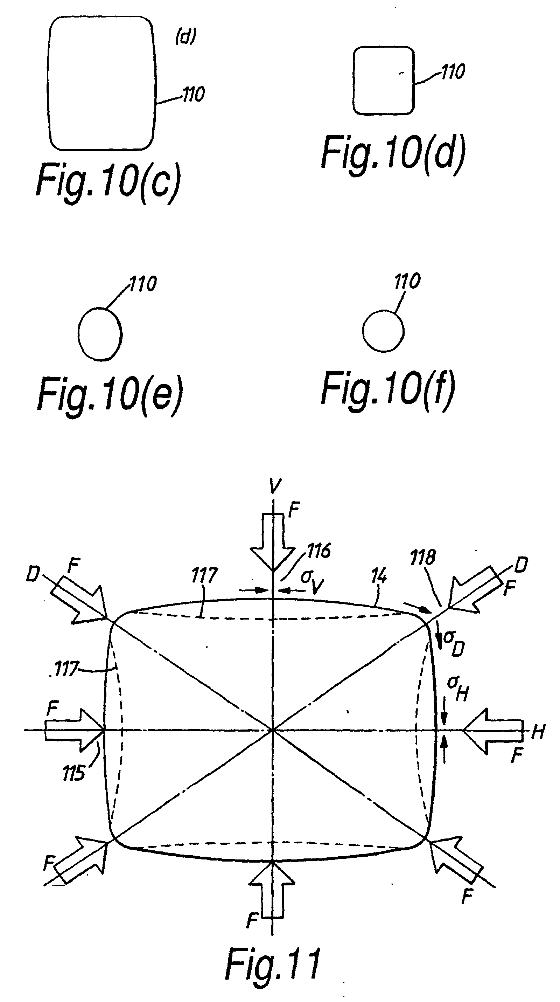

A countermeasure to solve this technical problem is described in Japanese Patent Application published after the examination (Tokkohsho) No. 48-34349 (its counterpart U.S. Patent No. 3,731,129). Briefly, the yoke portion 110 is made rectangular in cross-sectional shape similar to the panel 102. When a rectangular raster is depicted on the phosphor screen, a region at the yoke portion where the electron beams pass through is also rectangular in cross-sectional shape. A cathode ray tube 113 shown in Figure 10(a) has cross-sectional shapes 102 and 110 taken along lines B-B through F-F as shown in Figures 10(b) through 10(f), respectively. The shapes vary gradually from the rectangles to the circle. The panel 102 and the yoke portion 110 have approximately rectangular cross-sections but the neck 104 has semi-circle and circle cross-sections. If the yoke portion 110 is made pyramid-like in configuration as shown, the long and short axes (the horizontal and vertical axes: H-axis and V-axis) of the deflection yoke are made small so that horizontal and vertical deflection coils of the deflection yoke are disposed close to the electron beams. With this structure, the electron beams are effectively deflected and the deflection power consumption, thus, can be reduced.

In such a cathode ray tube, as the cross-section of the yoke portion 110 becomes much closer to a rectangle, the horizontal and vertical axes 115 and 116 and the vicinities thereof are subject to more distortion in dotted-line directions 117 due to the atmospheric pressure F as shown in Figure 11. The outer peripheries of the horizontal and vertical axes 115 and 116 of the yoke portion 110 receive compressive stress $\sigma H$ and $\sigma V$ while the outer periphery of the diagonal axis 118 and the vicinity thereof receive tensile stress $\sigma D$. As a result, the vacuum enclosure decreases its anti-atmospheric strength and safety.

Further, it is desirable to make the panel as flat as possible in compliance with such demands as avoidance of outer light reflection thereon and comfortable watching of images. Since it also decreases the strength of the vacuum enclosure, even if a conventional funnel with a pyramid-like deflection yoke portion is used, the strength necessary for safety cannot be always secured.

Because of the reasons set forth above, it is difficult to make the cross-section of the yoke portion rectangular to such extent as sufficient reduction of the deflection power consumption, or, even though the rectangular configuration is achieved, the strength of the vacuum enclosure is too weak to apply to a flat panel cathode ray tube.

The assignee of this application developed a technology concerning the pyramid-like shaped yoke portion as mentioned above and commercialized cathode ray tubes to which the technology was applied around 1970. In fact, two series of commercialized cathode ray tube apparatus were: 110 degree deflection angle, 36.5mm long neck diameter, and 18', 20', 22' and 26' diagonal lengths and 110 degree deflection angle, 29.1mm neck diameter, and 16' and 20' diagonal lengths. At that time, however, the cathode ray tubes had spherical outer surface panel which outer curvature radius was about 1.7 times the effective diagonal length of the screen and were called 1R tubes (hereinafter also referred to as the "1R tubes"). The relationship between the configuration of the yoke portion and the vacuum enclosure strength was unknown in the case of cathode ray tubes which panel outer curvature radii were 2 times or more the effective diagonal length of the screen.

As set forth above, the reduction of the deflection power consumption and the leakage magnetic field are nowadays required, but it is extremely difficult to comply with those requirements and, at the same time, to achieve high brightness, high frequency cathode ray tubes particularly used for high definition TVs, personal computers and other office automation equipment. Conventionally, it has been proposed that, as a structure to reduce the deflection power consumption, the pyramid-like configuration of the yoke portion varies from a circular cross-section at the neck to a rectangular cross-section at the funnel.

Hitherto, it has not been successful to provide a cathode ray tube which copes with a vacuum enclosure with the sufficient strength as wall as satisfactorily reduced deflection power consumption. This is particularly true in the case that the vacuum enclosure has a flat panel whose outer curvature radius is twice the effective diagonal length of its screen.

SUMMARY OF THE INVENTION

This invention is to overcome such technical difficulties as set forth above. One of its objects is to provide a cathode ray tube which has a vacuum enclosure with a pyramid-like shaped yoke portion and yet bears the strength of a sufficient anti-atmospheric pressure and which deflection power consumption is effectively reduced.

A cathode ray tube apparatus of the present invention includes a vacuum enclosure and a deflection yoke fixed on the enclosure. The vacuum enclosure consists of a panel which inner wall has at least a rectangle-shaped phosphor screen, a neck provided with an electron gun therein, and a yoke portion connected to the neck on the screen aide thereof. The electron gun is disposed opposite to the phosphor screen. The deflection yoke is fixed on an outer surface region from the yoke portion to the neck. The deflection yoke deflects an electron beam emanated from the electron gun to scan the screen with the aspect ratio of M:N.

The outer curvature radius of the panel is twice the effective diagonal radius of the screen in the case that a circular approximation is assumed for the outer configuration of the panel based on a difference in a tube axis direction between the center of diagonal edges of the screen. The yoke portion extends from a connection position of the neck to side edges of the screen, and has outer cross-sections perpendicular to the tube axis. A reference deflection position is located at a diagonal deflection angle defined between the tube axis Z and two lines extending from the tube axis Z to the diagonal edges of the screen. If axial lengths LA, SA, and DA are defined between the tube axis Z and intersections of the horizontal, vertical and diagonal axes and the outer cross-section periphery of the yoke portion, respectively, the following equation is established:

$$(M+N)/2(M^2+N^2) < (SA+LA)/2DA \le 0.86$$

In this case, the outer cross-section of the yoke portion perpendicular to the tube axis at the reference position is substantially a rectangle-like shape similar to that of the screen. In the event that the rectangle-like shape is approximated with arcs of radii Rv and Rh which centers are on the vertical and horizontal axes and an arc of a radius Rd which center is on or close to the diagonal axis, one of the radii Rh and Rv is 900mm or less.

According to the another aspect of the invention, a cathode ray tube apparatus includes a vacuum enclosure which has a panel which inner wall has at least a rectangle-like shaped phosphor screen, a neck provided with an electron gun therein which is disposed opposite to the phosphor screen, and a yoke portion connected to the neck on the screen side thereof, and a deflection yoke fixed on an outer surface region from the yoke portion to the neck of the vacuum enclosure.

The deflection yoke deflects an electron beam emanated from the electron gun to scan the screen with the aspect ratio of M:N. The outer curvature radius of the panel is twice the effective diagonal radius of the screen in the case that a circular approximation is assumed for the outer configuration of the panel based on a difference in a tube axis direction between the center of diagonal edges of the screen.

The yoke portion extends from a connection position with the neck to side edges of the screen, and has outer cross-sections perpendicular to the tube axis. A reference deflection position is located at a diagonal deflection angle defined between two lines extending from the tube axis and the diagonal edge. The outer cross-section of the yoke portion perpendicular to the tube axis at the reference position is substantially a rectangle-like shape similar to that of the screen. In the case that the rectangle-like shape is approximated with arcs of radii Rv, Rh and Rd which centers are on the vertical, horizontal and diagonal axes, respectively, the radius Rd is:

$$5mm \le Rd \le 15mm.$$

The above-stated and other objects and advantages of the invention will become apparent from the following description when taken with the accompanying drawings. It will be understood, however, that the drawings are for the purposes of illustration and are not to be construed as defining the scope or limits of the invention, reference being had for the latter purpose to the claims appended hereto.

BRIEF DESCRIPTION OF THE DRAWINGS

Figure 1 is a perspective view of a cathode ray tube of one embodiment of the present invention;

Figure 2 is a diagram to explain the configuration of a yoke portion of the cathode ray tube shown in Figure 1;

Figure 3 is a cross-sectional view of the yoke portion perpendicular to the tube axis at a reference deflection position;

Figure 4 is a cross-sectional view taken along IV-IV line in Figure 1 but its upper half only;

Figure 5 is a characteristic graph to show the relationship between the maximum curvature radius and the maximum vacuum stress with respect to embodiments and conventional examples;

Figures 6(a) and 6(b) are cross-sectional and plan views of a display panel to define the center of deflection, respectively;

Figure 7 is a graph to show the relationship between the configurations of the yoke portion and deflection power consumption;

Figure 8 is a partially cut-out perspective view of a conventional color picture tube;

Figures 9(a) and 9(b) are schematic cross-sectional and plan views of a conventional cathode ray tube, respectively, to explain a problem raised in the case that the radii of its neck and funnel on the neck side are small;

Figures 10(a) through 10 (f) are schematic diagrams to explain the configurations of a vacuum enclosure of the conventional color cathode ray tube at various cross sections; and

Figure 11 is a schematic diagram to explain stress taking place with the yoke portion.

DESCRIPTION OF THE PREFERRED EMBODIMENT

The inventors have researched a deflection characteristic and a stress distribution of a cathode ray tube apparatus which has a vacuum enclosure with a pyramid-like shaped yoke portion and a pyramid-like shaped deflection yoke, and have discovered optimum configurations of a vacuum enclosure for a cathode ray tube apparatus to comply with requirements for its strength and effective deflection power consumption.

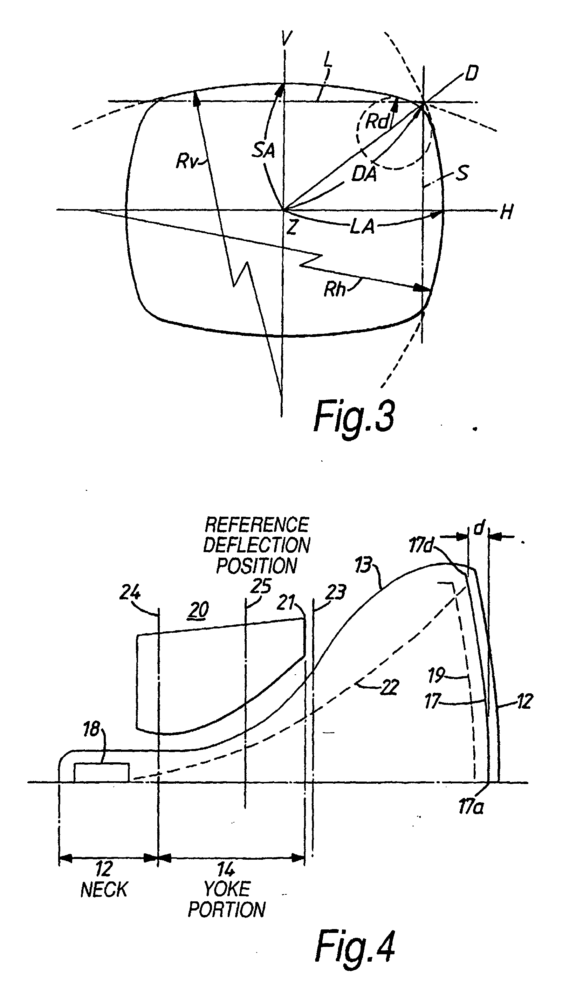

This invention is applied to a vacuum enclosure with a phosphor screen 17 which outer curvature radius is twice or more the effective diagonal length of the screen in the case that the outer surface flatness of a panel 12 is expressed with a circle equivalent approximation based on a difference 'd' on the tube axis Z between the center 17a and the diagonal end 17d of the screen 17 as shown in Figure 4.

Figure 3 shows *a* cross-sectional view of a yoke portion which is perpendicular to the tube axis. Axial lengths LA, SA, and DA are defined between the tube axis Z and intersection points of the horizontal, vertical and diagonal axes H, V and D and the outer periphery of the yoke portion, respectively, as shown in Figure 3. Since in the yoke portion 14, the lengths LA and SA are shorter than the length DA, a deflection coils in the vicinity of the vertical and horizontal axes are close to electron beams so that the deflection power consumption is reduced. The diagonal length DA is the longest in the cross section. It is not necessarily consistent with the diagonal axis direction of the screen 12.

In addition to the axial lengths LA, SA, and DA of the axes described above, the cross-sectional sides of the yoke portion are defined by arc curvature radii Rh, Rv and Rd whose centers are on the horizontal, vertical and diagonal axes, respectively. Other rectangle-like cross-section of the yoke portion than the one described above, however, may be made by various equations. As set forth above, the yoke portion is pyramid-like in outer configuration.

It is understood from the above description that the yoke portion cross-section, either one of which long and short arcs are not closer to the tube axis Z than one of either the long and short sides L and S, is non-circular, barrel-like in shape, for instance as shown in Figure 3.

As the yoke portion cross-section becomes closer to a rectangle, the vacuum enclosure strength is weaker but the deflection power consumption is more reduced. Here, an index to represent an approximation degree of a rectangle is set up in the following:

$$(LA + SA)/(2DA) \qquad (1)$$

In the case of an ordinary cone-shaped yoke portion, LA=SA=DA and the index is 1.

Where the yoke portion is pyramid-like shaped, the axial length DA remains approximately fixed to secure a space for the most outer electron beam orbit but both the lengths LA and SA become shorter than in the case of the cone-shaped yoke portion. If it is completely pyramid-like shaped and the aspect ratio of its rectangular cross-section is M:N, then the following equation is established:

$$(M+N) / 2 (M^2 + N^2)^{1/2} \qquad (2)$$

The index is expressed in the form of the shortened peripheral sides of the yoke portion outer periphery. Simulation analyses carried out by the inventors, however, have revealed that substantially the same reduction effect of the deflection power consumption can be attained even if either horizontal or vertical sides are only made into those of a rectangle, it is unnecessary to regard one of the lengths LA and SA as an important factor for the reduction effect, and the index is still useful.

Effects on configurations of the yoke portion along the tube axis have been analyzed. As a result, it has been found that such a region as from the reference deflection position 25 to the screen side edge 21 of the deflection yoke 20 shown in Figure 4 is important in regard to the rectangular cross-section thereof.

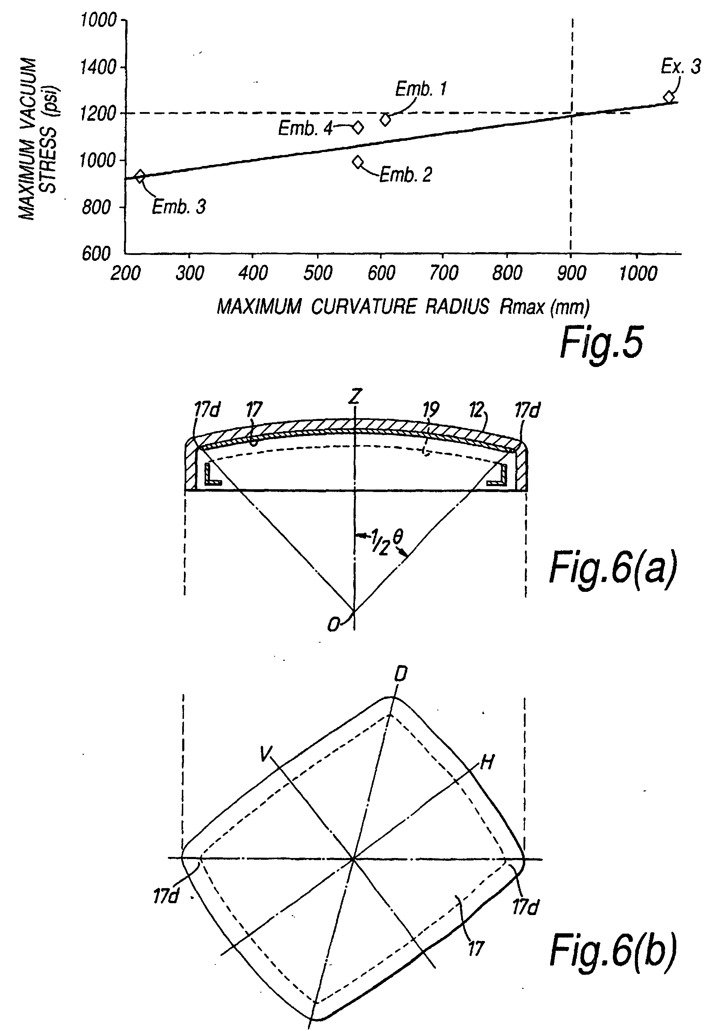

As shown in Figures 6 (a) and 6 (b), the deflection reference position is a deflection center position on the tube axis Z where a diagonal deflection angle θ of a cathode ray tube is defined between two lines drawn from the diagonal edges 17d to a point O on the tube axis Z.

Figure 4 shows an orbit of an electron beam 22 which is emanated toward the diagonal edge 17d of the screen 12 under the control of the deflection yoke 20 on the neck side of the yoke portion 14. In the event that the main deflection magnetic field is moved from the deflection reference position 25 to the neck 15 side, the electron beam 22 is deflected early with the strong magnetic field on the neck side so that it collides with the inner walls of the yoke portion 14. When the deflection magnetic field, however, is moved to the screen 17 side from the reference position 25, a space or room to avoid the electron beam collision increases around the inner wall. In other words, in the latter case, the neck length is extendable to such extent as the increase of the room around the inner wall and it is possible to reduce more the deflection power consumption.

Since, in cathode ray tubes with different neck diameters, differences in the configurations of yoke portions are up to the reference deflection position 25 but those of the yoke portion on the screen side are about the same, analysis results are almost identical.

First, the reduction effect of the deflection power consumption will be explained hereinbelow. Figure 7 is a graph to show the reduction of the deflection power consumption with respect to the index. Here, the technical specification of the deflection yoke is fixed but data are calculated in the following assumption: if the yoke portion is changed in shape, a deflection coil and core of the deflection yoke are deformed closely to fit it. Horizontal deflection power is regarded as the deflection power.

As shown, the reduction effect emerges abruptly at the index equal to about 0.86 or less and the deflection power consumption is less by about 10% to 30% than a cone-shaped yoke portion. If the index is 0.86 or more, the reduction effect is 10% or less.

In the case of conventional 29.1mm and 36.5mm necks 1R tubes with a rectangular cross-section yoke portion, the indices are 0.84 and 0.88, respectively. In short, the indices 0.84 to 0.88 have been achieved with the 1R tubes but cathode ray tubes do not have a practical advantage unless the reduction effect 10% or more, i.e., the index is 0.86 or less in consideration of difficulties of those with a pyramid-like shaped yoke portion and a flat panel because of a severe strength problem thereof to be overcome .

In realization of the index equal to O .86 or less, the problem is vacuum stress. A flat panel cathode ray tube is necessary to have much lower vacuum stress strength than 1R tubes with a rectangular cross-section yoke portion because a shock strength of the flat panel should be taken into consideration.

Table 1 shows comparison characteristics at the reference deflection position between conventional 1R tubes and cathode ray tubes of the present invention.

In the 1R tubes, the yoke portion has a bigger curvature radius in the vicinity of the diagonal end portions than the neck. 1R tubes with 29.1mm neck (example 1) have a flat surface adjacent to the horizontal axis but that with 36.5mm (example 2) has a small index, i.e., the latter has a disadvantage in small reduction effect of the deflection power consumption.

Of course, as the curvature radius at the diagonal edge portions is shorter, the stress increases. Since the most diagonally outer position where the electron beam lands varies in accordance with kinds of deflection yokes and the characteristic dispersion thereof, as the curvature radius is smaller, the tolerable area of the axial length becomes smaller and the electron beam is apt to collide with the inner wall of the yoke portion.

As a result of stress tests, although depends on other configurations and factors, if the radius Rd is generally 5mm or more, it is possible to avoid excessive stress concentration and to secure the minimum region for the largest radius of the yoke portion. The radii Rd of embodiments in Table 1 are tolerably set to be 8mm or more.

Examples 1 and 2 are conventional 1R tubes with a rectangular cross-section yoke portions in Table 1. Example 3 is another 1R tube of Example 1 plus a vacuum enclosure with a flat panel which outer curvature radius is twice the diagonal radius of a screen . Embodiments 1 through 4 of the invention are cathode ray tubes with flat panels similar to Example 3.

TABLE 1

| Tube | | | | | | | Defl. |
| --- | --- | --- | --- | --- | --- | --- | --- |
| | Rh | Rv | Rd | Rmax. | Flatness | Strength | power |
| Example 1 | 206 | 1057 | 15.6 | 1057 | Bad | Good | Good |
| Example 2 | 107 | 124 | 18.3 | 319 | Bad | Good | Poor |
| Example 3 | 206 | 1057 | 15.6 | 1057 | Good | (Bad) | Good |
| Embodiment 1 | 113 | 312 | 8.8 | 601 | Good | Good | Good |
| Embodiment 2 | 101 | 439 | 10.2 | 569 | Good | Good | Good |
| Embodiment 3 | 75 | 174 | 8.7 | 223 | Good | Good | Good |
| Embodiment 4 | 61 | 199 | 9.0 | 223 | Good | Good | Good |
| (Unit: mm) | | | | | | | |

In Table 1, the curvature radii Rh, Rv and Rd define the rectangle-like shaped cross-section at the reference deflection point of the yoke portion while the maximum outer curvature radius Rmax. is the largest outer curvature one of the cross-sections of the yoke position. Since the maximum outer curvature radius Rmax., however, is equal to or larger than the radius Rv, the former is on the cross-section located between the reference deflection position 25 and the inflection plane 23.

Figure 5 shows the maximum curvature radius Rmax. and the maximum vacuum stress in the case of Embodiments 1 through 4 and Example 1. A solid line in Figure 5 represents a correlation between the maximum curvature radii and the maximum vacuum stress which is inferred in accordance with stress data of Embodiments 1 through 4. Although there is dispersion due to slightly different deflection angles, radii Rd and the like, the maximum vacuum stress, in general, increases as the maximum curvature radius does. In the case that a panel is so flat that the maximum curvature radius is about twice that of a conventional one, the maximum vacuum stress of the vacuum enclosure is empirically = 82,7 bar (1,200psi). From the data shown in Figure 5, if the maximum curvature radius is 900mm or less, it is analyzed that the maximum stress of the yoke portion is less than = 82,7 bar (1,200 psi). In the case of Example 3 consisting of the conventional 1R tube (Example 1) to which the flat panel is applied, the maximum vacuum stress is presumably more than = 82,7 bar (1,200 psi). In short, the design of a conventional 1R tube with a rectangular cross-section yoke potion is difficult to satisfy the flatness with necessary strength and the reduction of deflection power consumption.

Those analyses have been carried out for generally acceptable glass thickness (10mm through 14mm at the center of a panel, and 2mm through 8mm at a yoke portion where the diagonal edge is thin but the vicinities of the horizontal and vertical axes are thick). As a matter of course, if the glass thickness increases, the vacuum stress reduces. It is not, however, a realistic solution from a view point of a cathode ray tube weight.

In summary, as a solution to cope with both of the reduction of the deflection power consumption and the vacuum stress and strength, a yoke portion is provided with the following configuration:

$$(M+N) / 2(M^2 +N^2)^{1/2} < (SA+LA) / (2DA) \leq 0.86$$

where a panel has the aspect ratio of M:N, and axial lengths LA, SA, and DA are defined between the tube axis Z and intersection points of the horizontal, vertical and diagonal axes H, V and D and the outer periphery of the yoke portion, respectively, as shown in Figure 3. In the yoke portion 14, the lengths LA and SA are shorter than the length DA.

The yoke portion is nearly rectangular in the cross-section perpendicular to the tube axis at the reference deflection position, but no side of the rectangle is projected toward the tube axis. In the case that the rectangle is approximated with arcs of the radii Rv, Rh and Rd which centers lay on the vertical, horizontal and diagonal axes, respectively, the radius Rv or Rh is set to be 900mm or less or the radius Rd is:

$$5mm \leq Rd \leq 15mm$$

The configuration of the yoke portion set forth above is also applicable to not only a screen with the aspect ratio of 4 : 3 but also other screens with the aspect ratio of 16:9 and 3:4.

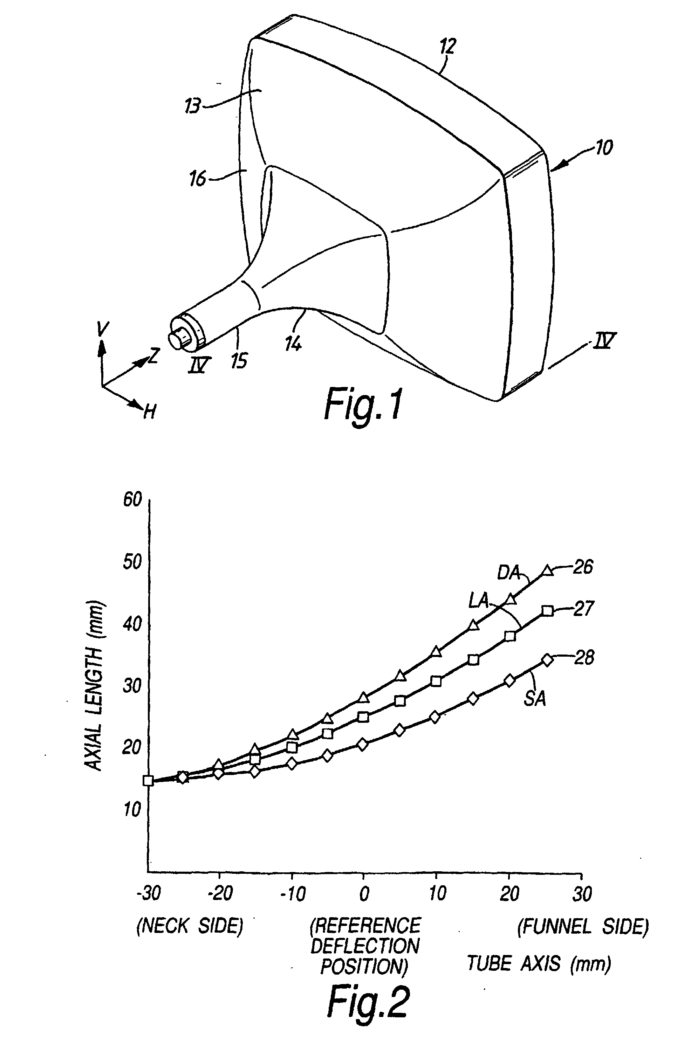

Embodiment 1 (see Table 1 ) of the present invention is explained hereinafter with reference to Figures 1 through 4. Figure 4 is a schematic sectional view taken along the tube axis Z and the diagonal axis D but only the upper half thereof to which a deflection yoke 20 is added.

This cathode ray tube 10 includes a vacuum enclosure 16 provided along the tube axis Z with a glass panel 12 which display screen is about rectangular in shape, a glass funnel 13 connected to the panel 12, a yoke portion 14 connected to a smaller radius portion of the funnel 13, and a glass neck 15 connected to the yoke portion 14. A phosphor screen 17 are formed on an inner wall of the panel 12. An electron gun 18 is disposed in the neck 15. The deflection yoke 20 is fixed on the yoke portion 14 and the neck 15. Horizontal and vertical magnetic fields generated by the deflection yoke 20 deflects electron beams emanated from the electron gun 18 in the horizontal and vertical directions. The electron beams scan the phosphor screen in the horizontal and vertical directions through a shadow mask 19 to display images on the display screen.

The yoke portion 14 of the cathode ray tube 10 is particularly pyramid-like in shape. Here, the deflection yoke is the saddle-saddle type which has a little magnetic leakage and which vertical and horizontal coils and cores are fixed by a cylinder-shaped frame made of a synthesized resin.

As shown in Figure 4, the outer peripheral configuration from the neck 15 to the funnel 13 of the vacuum enclosure is a letter S-like shape in the cross-section along the tube axis; a slightly outwardly swelled configuration of the funnel 13 and a slightly inwardly recessed configuration of the yoke portion 14. The boundary between the funnel 13 and the yoke portion 14 is an inflection plane 23. The panel side edge 21 of the deflection yoke 20 is disposed close to the inflection plane 23. The yoke portion 14 is substantially formed at a region from at least a neck connection edge 24 to the panel side edge 21.

Figure 2 shows configuration curves of the yoke portion 14 from the neck connection edge 24 to the screen side edge 21. The curves 26, 27 and 28 show changes of the axial lengths DA, LA and SA of the cross-section in the directions of the diagonal, longer and shorter axes, respectively. Seen from the curves 26, 27 and 28, the yoke portion is approximately circular in shape at the neck 15 and the neck connection edge 24 and the lengths LA and SA in the longer and shorter axes become gradually shorter than the diagonal length DA in the diagonal axis as the position is closer to the side of the screen 17. The yoke portion is approximately rectangular (non-circular) in cross-sectional shape along the tube axis.

In this case, the screen 17 has the aspect ratio of M:N=4:3. The yoke portion 14 has the following dimensions at the reference deflection position:

$$DA=28.4mm, LA=25.2mm, and SA=21.0mm$$

The index is as follows:

$$(LA+SA)/(2DA)=0.81$$

The deflection power consumption is about 25% less than that of the cathode ray tube with the cone-shaped yoke portion. The outer curvature radii of the yoke portion in the cross-section at the reference deflection position are:
    Rh=113mm, Rv=312mm, and Rd=8.8mm

The maximum vacuum stress of the yoke portion is 1,170psi so that it has no problem of the strength. Further, the glass thickness of the yoke portion is 2.5mm through 2.8mm on the diagonal axis, and 2.5mm through 5.7mm on the long and short axes. The glass thickness at the center of the panel is 12.5mm. Embodiment 1 is, thus, equivalent to cathode ray tubes in the mass-production and it has no problem of the weight, either.

Embodiment 2 in Table 1 is a cathode ray tube with the aspect ratio of M:N=4:3 and the dimension thereof is:
    DA=29.9mm, LA=26.7mm, and SA=22.3mm

$$(LA+SA)/(2DA)=0.82$$

The deflection power consumption is about 22% less than that of the cathode ray tube with the cone-shaped yoke portion. The outer curvature radii of the yoke portion in the cross-section at the reference deflection position are:
    Rh=101mm, Rv=439mm, and Rd=10.2mm
The maximum vacuum stress of the yoke portion is 68,9 bar (1,000psi) so that it has no problem of the strength.

Embodiment 3 in Table 1 is a cathode ray tube with the aspect ratio of M:N=4:3 and the dimension thereof is:
    DA=30.2mm, LA=27.1mm, and SA=22.5mm

$$(LA+SA)/(2DA)=0.82$$

The deflection power consumption is about 20% less than that of the cathode ray tube with the cone-shaped yoke portion. The outer curvature radii of the yoke portion in the cross-section at the reference deflection position are:
    Rh=75mm, Rv=174mm, and Rd=8.7mm
The maximum vacuum stress of the yoke portion is 63,4 bar (920psi) so that it has no problem of the strength.

Embodiment 4 in Table 1 is a cathode ray tube with the aspect ratio of M:N=4:3 and the dimension thereof is:
    DA=30.2mm, LA=27.5mm, and SA=22.5mm

$$(LA+SA)/(2DA)=0.83$$

The deflection power consumption is about 17% less than that of the cathode ray tube with the cone-shaped yoke portion. The outer curvature radii of the yoke portion in the cross-section at the reference deflection position are:
    Rh=61mm, Rv=199mm, and Rd=9.0mm
The maximum vacuum stress of the yoke portion is 78,6 bar (1,140psi) so that it has no problem of the strength.

The present invention provides a cathode ray tube apparatus with a pyramid-like shaped yoke portion of a vacuum enclosure which has sufficient anti-atmospheric strength and reduces effectively the deflection power consumption and which also complies with requirements for high brightness and high frequency.

**Claims**

1. A cathode ray tube apparatus comprising:

a vacuum enclosure defining a tube axis Z and including,
a panel (102) having a rectangle-shaped phosphor screen (105) and an outer surface which crosses the tube axis at substantially a right angle,
a neck (104) provided with an electron gun (108) disposed opposite to said phosphor screen, and
a yoke portion (110) connected between said neck and said panel; and
a deflection yoke (109) fixed on an outer surface region from said yoke portion to said neck of said vacuum enclosure,
said deflection yoke (109) configured to deflect an electron beam emanated from said electron gun to scan said screen with an aspect ratio of M:N,
said panel having an outer curvature radius equal to or greater than twice an effective diagonal length of said screen where a circular approximation is assumed for the outer configuration of said panel and the outer curvature radius is defined based on a difference in a tube axis direction between the center of the screen and the diagonal edges of said screen,

wherein cross-sections of the yoke portion (110) perpendicular to the tube axis define outer radiii between the outer surface of the yoke portion to the tube axis, and at least one of the outer cross-sections of said yoke portion is non-circular and includes a maximum radius between vertical and horizontal directions of said screen,
**characterised in that** a reference deflection point (25) is located at a diagonal deflection angle defined between two lines extending from the tube axis to the diagonal edges of said rectangle-shaped phosphor screen (105), and axial lengths LA, SA, and DA are defined between the tube axis Z and intersection points of the horizontal, vertical and diagonal axes H, V and D and the outer periphery of the yoke portion in a plane perpendicular to the tube axis at the reference deflection point, respectively, such that the following relation is satisfied:

$$(M+N)/2(M^2 + N^2)^{\frac{1}{2}} < (SA+LA)/(2DA) \leq 0.86$$

2. A cathode ray tube apparatus according to claim 1, wherein the outer cross-section of said yoke portion perpendicular to the tube axis at the reference deflection point is substantially of a rectangle-like shape similar to that of said screen, wherein said rectangle-like shape is approximated with arcs of radii Rv and Rh having centers which are on the vertical and horizontal axes and an arc of a radius Rd having a center which is on a diagonal axis of the rectangle shape, and one of said radii Rh and Rv is 900 mm or less.

3. A cathod ray tube apparatus according to claim 2, wherein

$$5mm \leq Rd \leq 15mm$$

4. A cathod ray tube apparatus according to claim 1,
wherein the outer cross-section of said yoke portion perpendicular to the tube axis at the reference deflection position is substantially a rectangle-like shape similar to said screen,
wherein said rectangle-like shape is approximated with arcs of curvature radii Rv and Rh having centers which are on the vertical and horizontal axes and an arc of a radius Rd having a center on a diagonal axis of the rectangle shape, and

$$5mm \leq Rd \leq 15mm$$

5. A cathode ray tube apparatus according to any one of the preceding claims wherein a funnel portion is provided between said panel and said yoke portion.

6. A cathode ray tube apparatus according to any one of claims 2 to 4 wherein the outer cross-section of said yoke portion is a barrel-like shape.

**7.** A cathode ray tube apparatus according to claim 5, wherein the vacuum enclosure between the neck and the funnel has a curved outer surface and a boundary between said yoke portion and said funnel is at an inflection point of said curve.

**Patentansprüche**

**1.** Ein Kathodenstrahlröhrengerät mit:

einer Vakuumeinfassung, die eine Röhrenachse Z definiert und aufweist ein Panel (102), das einen rechteckförmigen Phosphorschirm (105) und eine äußere Oberfläche aufweist, die die Röhrenachse im wesentlichen unter einem rechten Winkel schneidet,
einen Hals (104), der mit einer Elektronenkanone (108) versehen ist, die zu dem genannten Phosphorschirm gegenüberliegend angeordnet ist, und
einen Jochbereich (110), der zwischen dem genannten Hals und dem genannten Panel verbunden ist; und mit einem Ablenkungsjoch (109), das an einem Außenflächenbereich von dem genannten Jochbereich zu dem genannten Hals der genannten Vakuumeinfassung befestigt ist,

wobei das genannte Ablenkungsjoch (109) derart ausgebildet ist, daß es einen von der genannten Elektronenröhre herrührenden Elektronenstrahl ablenkt, um den genannten Schirm mit einem Seitenverhältnis von M:N abzutasten,
wobei das genannte Panel einen äußeren Krümmungsradius aufweist, der gleich einem Wert oder größer als ein Wert ist, der dem Doppelten einer effektiven diagonalen Länge des genannten Schirmes entspricht, wobei eine kreisförmige Annäherung für die äußere Konfiguration des genannten Panels angenommen ist und der äußere Krümmungsradius basierend auf einer Differenz in einer Röhrenachsenrichtung zwischen dem Zentrum des Schirmes und den diagonalen Kanten des genannten Schirmes definiert ist,
wobei Querschnitte des Jochbereiches (110) senkrecht zu der Röhrenachse äußere Radien zwischen der äußeren Fläche des Jochbereiches zu der Röhrenachse definieren und wobei wenigstens einer der äußeren Querschnitte des genannten Jochbereiches nicht kreisförmig ist und eine maximalen Radius zwischen vertikalen und horizontalen Richtungen des genannten Schirmes aufweist,
**dadurch gekennzeichnet, daß** ein Referenzablenkungspunkt (25) an einem diagonalen Ablenkungswinkel angeordnet ist, der zwischen zwei Linien definiert ist, die sich von der Röhrenachse zu den diagonalen Kanten des genannten rechteckförmigen Phosphorschirmes (105) erstrecken, und wobei axiale Längen LA, SA und DA zwischen der Röhrenachse Z und den Schnittpunkten der horizontalen, vertikalen und diagonalen Achsen H, V und D definiert sind und der äußere Umfang des Jochbereiches in einer Ebene senkrecht zu der Röhrenachse an dem Referenzablenkungspunkt jeweils so ist, daß der folgenden Gleichung genügt ist:

$$(M+N)/2(M^2 + N^2)^{1/2} < (SA+LA)/(2DA) \leq 0.86$$

**2.** Ein Kathodenstrahlröhrengerät nach Anspruch 1, wobei der äußere Querschnitt des genannten Jochbereiches senkrecht zu der Röhrenachse an dem Referenzablenkungspunkt im wesentlichen von einer rechteckartigen Form ist, die zu derjenigen des Schirmes ähnlich ist, wobei die genannte rechteckartige Form mit Bögen mit Radien Rv und Rh angenähert ist, die Zentren aufweisen, die auf den vertikalen und horizontalen Achsen liegen, und mit einem Bogen eines Radius Rd, der ein Zentrum aufweist, das auf der diagonalen Achse der rechteckigen Form liegt, wobei einer der Radien Rh und Rv 900 mm oder weniger ist.

**3.** Ein Kathodenstrahlröhrengerät nach Anspruch 2, wobei

$$5mm \leq Rd \leq 15mm$$

**4.** Ein Kathodenstrahlröhrengerät nach Anspruch 1, wobei der äußere Querschnitt des genannten Jochbereiches senkrecht zu der Röhrenachse an dem Referenzablenkungspunkt im wesentlichen eine rechteckartige Form aufweist, die zu dem genannten Schirm ähnlich ist,
wobei die genannte rechteckartige Form angenähert ist mit Bögen mit Krümmungsradien Rv und Rh, die Zentren aufweisen, die auf den vertikalen und horizontalen Achsen liegen, und einem Bogen eines Radius Rd, der ein Zentrum auf einer diagonalen Achse der rechteckigen Form aufweist, und wobei

$$5mm \leq Rd \leq 15mm$$

5. Ein Kathodenstrahlröhrengerät nach einem der vorhergehenden Ansprüche, wobei ein Trichterbereich zwischen dem genannten Panel und dem genannten Jochbereich vorgesehen ist.

6. Ein Kathodenstrahlröhrengerät nach einem der Ansprüche 2 bis 4, wobei der äußere Querschnitt des genannten Jochbereiches eine faßartige Form hat.

7. Ein Kathodenstrahlröhrengerät nach Anspruch 5, wobei die Vakuumeinfassung zwischen dem Hals und dem Trichter eine gekrümmte äußere Fläche aufweist und wobei eine Begrenzung zwischen dem genannten Jochbereich und dem genannten Trichter sich an einem Wendepunkt der genannten Kurve befindet.

**Revendications**

1. Dispositif de tube à rayons cathodiques comprenant :

une enceinte sous vide définissant un axe de tube Z et comprenant,
un panneau (102) comportant un écran à luminophore de forme rectangulaire (105) et une surface extérieure qui croise l'axe de tube sensiblement à angle droit,
un col (104) pourvu d'un canon à électrons (108) disposé à l'opposé dudit écran à luminophore, et
une partie de collier (110) connectée entre ledit col et ledit panneau, et
un collier de déviation (109) fixé sur une région de surface extérieure de ladite partie de collier audit col de ladite enceinte sous vide,
ledit collier de déviation (109) étant configuré de manière à dévier un faisceau d'électrons provenant dudit canon à électrons pour balayer ledit écran avec un format d'image M:N,
ledit panneau présentant un rayon de courbure extérieur égal ou supérieur à deux fois une longueur de diagonale réelle dudit écran où une approximation circulaire est supposée pour la configuration extérieure dudit panneau et le rayon de courbure extérieur est défini sur la base d'une différence dans une direction d'axe de tube entre le centre de l'écran et les bords diagonaux dudit écran,

dans lequel les sections transversales de la partie de collier (110) perpendiculaires à l'axe de tube définissent des rayons extérieurs entre la surface extérieure de la partie de collier et l'axe de tube, et au moins l'une des sections transversales extérieures de ladite partie de collier est non circulaire et comprend un rayon maximum entre les directions verticale et horizontale dudit écran,
**caractérisé en ce qu'**un point de déviation de référence (25) est situé selon un angle de déviation diagonal défini entre deux droites s'étendant à partir de l'axe de tube vers les bords diagonaux dudit écran à luminophore de forme rectangulaire (105), et les longueurs axiales LA, SA et DA sont définies entre l'axe de tube Z et les points d'intersection des axes horizontal, vertical et diagonal H, V et D et la périphérie extérieure de la partie de collier dans un plan perpendiculaire à l'axe de tube au niveau du point de déviation de référence, respectivement, de telle sorte que la relation suivante soit satisfaite :

$$(M+N)/2(M^2+N^2)^{1/2} < (SA+LA)/(2DA) \leq 0{,}86.$$

2. Dispositif de tube à rayons cathodiques selon la revendication 1, dans lequel la section transversale extérieure de ladite partie de collier perpendiculaire à l'axe de tube au point de déviation de référence est sensiblement d'une forme rectangulaire similaire à celle dudit écran, dans lequel ladite forme rectangulaire est approchée par des arcs de rayons Rv et Rh ayant des centres qui sont sur les axes vertical et horizontal et un arc d'un rayon Rd ayant un centre qui est sur un axe diagonal de la forme rectangulaire, et l'un desdits rayons Rh et Rv est de 900 mm ou moins.

3. Dispositif de tube à rayons cathodiques selon la revendication 2, dans lequel

5 mm ≤ Rd ≤ 15 mm.

4. Dispositif de tube à rayons cathodiques selon la revendication 1,
dans lequel la section transversale extérieure de ladite partie de collier perpendiculaire à l'axe de tube à la position de déviation de référence est sensiblement d'une forme rectangulaire similaire audit écran,
dans lequel ladite forme rectangulaire est approchée par des arcs de rayons de courbure Rv et Rh ayant des centres qui sont sur les axes vertical et horizontal et un arc d'un rayon Rd ayant un centre sur un axe diagonal de la forme rectangulaire, et

5 mm ≤ Rd ≤ 15 mm.

5. Dispositif de tube à rayons cathodiques selon l'une quelconque des revendications précédentes, dans lequel une partie d'entonnoir est prévue entre ledit panneau et ladite partie de collier.

6. Dispositif de tube à rayons cathodiques selon l'une quelconque des revendications 2 à 4, dans lequel la section transversale extérieure de ladite partie de collier a une forme de cylindre.

7. Dispositif de tube à rayons catholiques selon la revendication 5, dans lequel l'enceinte sous vide entre le col et l'entonnoir a une surface extérieure incurvée et une limite entre ladite partie de collier et ledit entonnoir se trouve au niveau d'un point d'inflexion de ladite courbe.

*Fig.1*

*Fig.2*

**Fig.3**

REFERENCE
DEFLECTION
POSITION

12
NECK

14
YOKE
PORTION

**Fig.4**

*Fig.5*

*Fig.6(a)*

*Fig.6(b)*

Fig.7

Fig.8

Fig.9(a)

Fig.9(b)

Fig.10(a)

Fig.10(b)

Fig.10(c)

Fig.10(d)

Fig.10(e)

Fig.10(f)

Fig.11